# EUROPÄISCHE PATENTANMELDUNG

(11) **EP 0 691 800 A2**
(43) Veröffentlichungstag der Anmeldung: **10.01.1996**
(21) Anmeldenummer: 95109843.3
(22) Anmeldetag: 23.06.1995
(51) Int. Cl.: H05B 41/29

(54) **Schaltungsanordnung zum Betrieb von Niederdruckentladungslampen**

(30) Priorität: 07.07.1994 DE 9410910 U
(71) Anmelder: Patent-Treuhand-Gesellschaft für elektrische Glühlampen mbH, D-81543 München (DE)
(72) Erfinder: Statnic, Eugen, D-81243 München (DE); Rasch, Erhard, D-85521 Ottobrunn (DE)

(57) **Zusammenfassung**

Die Erfindung betrifft eine Schaltungsanordnung zum Betrieb von Niederdruckentladungslampen (L). Die Schaltungsanordnung besitzt einen Halbbrückenwechselrichter (WR) mit nachgeschaltetem LC-Ausgangskreis (LR, CK, CR). Parallel zum Eingang des von einer Gleichspannungsquelle (GL) gespeisten Wechselrichters (WR) ist eine 2C-3D-Glättungseinheit (G) geschaltet, die neben zwei Elektrolytkondensatoren (C1, C2) und drei Dioden (D1, D2, D3) erfindungsgemäß einen ohmschen Widerstand (R1) mit parallel dazu angeordnetem Kondensator (C3) aufweist. Der ohmsche Widerstand (R1) und der Kondensator (C3) verbessern den Klirrfaktor der Schaltung auf einen Wert unterhalb von 30 % und erhöhen den Netzleistungsfaktor auf mehr als 0,95.

## Beschreibung

Die Erfindung betrifft eine Schaltungsanordnung zum Betrieb Von Niederdruckentladungslampen gemäß dem Oberbegriff des Schutzanspruchs 1.

Derartige Schaltungsanordnungen werden in Elektronischen Vorschaltgeräten (EVG) für Niederdruckentladungslampen, in Adaptern und in, Sockelteil von kompakten Leuchtstofflampen eingesetzt. Bei der Entwicklung solcher Schaltungen ist man bestrebt, einen möglichst geringen Klirrfaktor, das heißt, eine möglichst geringe Verzerrung des Netzstromes, und einen möglichst hohen Netzleistungsfaktor zu erzielen.

Eine dem Oberbegriff des Schutzanspruchs 1 entsprechende Schaltungsanordnung ist beispielsweise in der US 5,049,788 offenbart. Sie besitzt einen Halbbrückenwechselrichter mit einen, nachgeschalteten LC-Ausgangskreis, der zur Spannungsversorgung einer Niederdruckentladungslampe dient. Der Halbbrückenwechselrichter wird mit der gleichgerichteten Netzspannung gespeist. Die Gleichrichteranordnung umfaßt einen Brückengleichrichter sowie zwei parallel zum Wechselrichtereingang geschaltete Elektrolytkondensatoren und drei Gleichrichterdioden, die derart mit den Elektrolytkondensatoren verbunden sind, daß die Elektrolytkondensatoren während des Ladevorganges in Serie und während des Entladevorganges parallel zueinander geschaltet sind. Schaltungsanordnungen, die auf diesem Prinzip beruhen, besitzen einen Netzleistungsfaktor von ca. 0,83 bis 0,90 und einen Klirrfaktor von ca. 45 % bis 55 %.

Es ist die Aufgabe der Erfindung, eine Schaltungsanordnung zum Betrieb von Niederdruckentladungslampen bereitzustellen, die einen Netzleistungsfaktor größer als 0,95 und einen Klirrfaktor unter 30 % aufweist.

Diese Aufgabe wird erfindungsgemäß durch die kennzeichnenden Merkmale des Schutzanspruchs 1 gelöst. Besonders vorteilhafte Ausführungen der Erfindung sind in den Unteransprüchen beschrieben.

Die erfindungsgemäße Schaltungsanordnung besitzt einen Halbbrückenwechselrichter, der mit einer Gleichspannung versorgt wird, die durch einen Brückengleichrichter mit einer nachgeschalteten, modifizierten 2C-3D-Glättungseinheit erzeugt wird. Die 2C-3D-Glättungseinheit enthält zwei Elektrolytkondensatoren und drei Gleichrichterdioden. Mittels der drei Gleichrichterdioden sind die beiden Elektrolytkondensatoren derart zwischen den Netzgleichrichter und den Eingang des Wechselrichters in die Schaltung integriert, daß die Elektrolytkondensatoren während des Ladevorganges in Serie und während des Entladevorganges parallel zueinander geschaltet sind. Zusätzlich weist die 2C-3D-Glättungseinheit erfindungsgemäß einen ohmschen Widerstand und einen parallel dazu geschalteten Kondensator auf, der den Widerstand für hochfrequente Wechselspannungen von ca. 30 KHz bis 200 KHz, wie sie üblicherweise vom Wechselrichter erzeugt werden, überbrückt. Während des Ladevorganges ist der ohmsche Widerstand in Serie zu beiden Elektrolytkondensatoren geschaltet ist und wird somit vom Kondensatorladestrom durchflossen. Dieser Widerstand glättet den Netzstrom, indem er die Ladestromspitze reduziert und die Ladezeit verlängert. Der parallel zu diesem Widerstand angeordnete Kondensator verbessert die Zündwilligkeit der Niederdruckentladungslampe, indem er den ohmschen Widerstand der Glättungseinheit für den vom LC-Ausgangskreis des Wechselrichters zu den Elektrolytkondensatoren der Glättungseinheit zurückfließenden hochfrequenten Freilaufstrom überbrückt. Durch die derart erweiterte 2C-3D-Glättungseinheit sinkt der Klirrfaktor des Netzstromes auf einen Wert unterhalb von 30 % und der Netzleistungsfaktor verbessert sich auf einen Wert oberhalb von 0,95.

Nachstehend wird die erfindungsgemäße Schaltungsanordnung anhand eines bevorzugten Ausführungsbeispiels näher erläutert. Es zeigen:
- Figur 1: Eine schematische Skizze der erfindungsgemäßen Schaltungsanordnung
- Figur 2: Ein Ausführungsbeispiel der erfindungsgemäßen Schaltungsanordnung für eine 20 W Leuchtstofflampe betrieben an 120 V Netzspannung

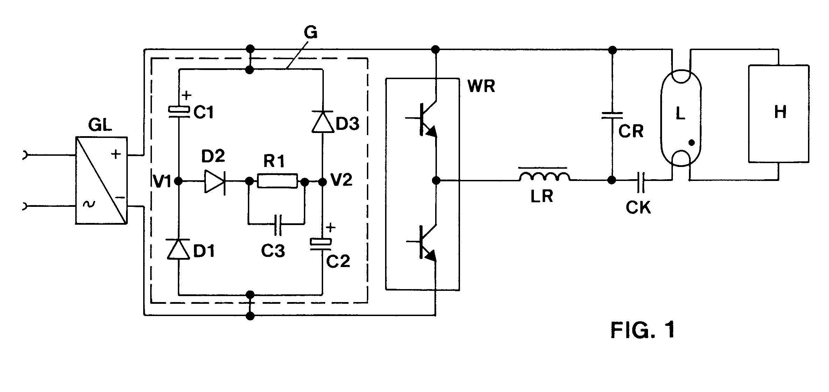

Figur 1 veranschaulicht das Grundprinzip der erfindungsgemäßen Schaltungsanordnung. Die erfindungsgemäße Schaltungsanordnung besitzt einen Wechselrichter WR mit einem nachgeschalteten Serienresonanzkreis, der eine Resonanzinduktivität LR, einen Resonanzkondensator CR und einen Kopplungskondensator CK sowie eine Niederdruckentladungslampe L mit vorheizbaren Elektrodenwendeln umfaßt. Parallel zur Lampe L ist eine Elektrodenvorheizvorrichtung H geschaltet. Der Wechselrichter WR wird mit der durch den Netzgleichrichter GL gleichgerichteten Netzspannung versorgt. Parallel zum Eingang des Wechselrichters WR und zum Gleichspannungsausgang des Netzgleichrichters GL ist eine modifizierte 2C-3D-Glättungseinheit G geschaltet, die aus zwei Elektrolytkondensatoren C1, C2, drei Gleichrichterdicden D1, D2, D3, einem ohmschen Widerstand R1 und einem Kondensator C3 besteht. Während des Ladevorganges sind die beiden Elektrolytkondensatoren C1, C2 über den Verzweigungspunkt V1, die in Durchlaßrichtung gepolte Gleichrichterdiode D2, den ohmschen Widerstand R1 und den Verzweigungspunkt V2 in Serie geschaltet. Dieser Ladevorgang dauert an, solange die vom Netzgleichrichter GL gleichgerichtete momentane Netzspannung größer als die Summe der an den Elektrolytkondensatoren C1, C2 anliegenden Spannungen U_{C1}, U_{C2}, bzw. bei Verwendung gleichartiger Elektrolytkondensatoren größer als 2 U_{C1} ist. Während des Ladevorganges entspricht die Wechselrichterversorgungsspannung der momentanen gleichgerichteten Netzspannung.

Der ohmsche Widerstand R1 reduziert den Ladestromstoß, indem er die Amplitude des Ladestromes um ca. 65 % reduziert und den Ladevorgang um ca. 0,8 ms beim unten näher beschriebenen Ausführungsbeispiel verlängert. Parallel zum Widerstand R1 ist der Kondensator C3 geschaltet. Er überbrückt den Widerstand R1 für den vom Serienresonanzkreis in die Elektrolytkondensatoren C1, C2 zurückfließenden hochfrequenten Freilauflaufstrom. Der Klirrfaktor wird durch diese Schaltung auf einen Wert unterhalb von 30 % vermindert und der Netzleistungsfaktor auf einen Wert oberhalb von 0,95 angehoben.

Sinkt die momentane gleichgerichtete Netzspannung unter den Wert von 2 U_{C1}, so fließt der Netzstrom direkt zum Wechselrichter WR, der Ladestrom ist gleich null und die Versorgungsspannung des Wechselrichters WR entspricht der momentanen gleichgerichteten Netzspannung.

Während die momentane gleichgerichtete Netzspannung Werte unterhalb der Kondensatorspannung U_{C1} durchläuft, entladen sich die Elektrolytkondensatoren C1 und C2 über die Gleichrichterdicden D1 bzw. D3. Die beiden Elektrolytkondensatoren C1, C2 sind während des Entladevorganges parallel zueinander geschaltet. Die Wechselrichterversorgungsspannung wird währenddessen durch den zeitlichen Verlauf der Kondensatorspannung U_{C1} bestimmt.

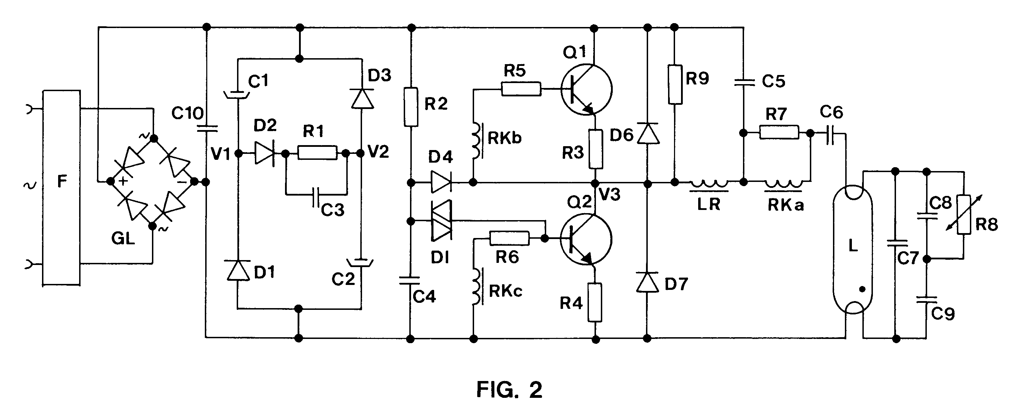

Figur 2 zeigt die erfindungsgemäße Schaltungsanordnung zum Betrieb einer 20 W Leuchtstofflampe an 120 V Netzspannung. Die Dimensionierung der verwendeten Bauteile ist in der Tabelle 1 angegeben. Die Schaltungsanordnung enthält einen selbstgesteuerten Halbbrückenwechselrichter, der in, wesentlichen von den Schalttransistoren Q1, Q2 und den Transformatorwicklungen RKa, RKb, RKc gebildet wird. Die Sekundärwicklungen RKb und RKc sind jeweils über einen Basisvorwiderstand R5 bzw. R6 zum Basisanschluß des Transistors Q1 bzw. Q2 geführt, während die Primärwicklung RKa in den Serienresonanzkreis integriert ist, der an den Mittenabgriff V3 zwischen den Transistoren Q1, Q2 angeschlossen ist. Parallel zu den Schaltstrecken der Transistoren Q1, Q2 ist jeweils eine Freilaufdiode D6, D7 geschaltet, die die Kollektor-Emitter-Strecke vor Spannungsüberlastung schützen.

Der Serienresonanzkreis umfaßt die Resonanzinduktivität LR, die Resonanzkondensatoren C5, C7, die Transformatorprimärwicklung RKa, die ohmschen Widerstände R7 und R9, den Kopplungskondensator C6 sowie eine 20 W Leuchtstofflampe L mit vorheizbaren Elektrodenwendeln. Parallel zur Leuchtstofflampe L ist eine Elektrodenheizvorrichtung, bestehend aus zwei Kondensatoren C8, C9 und einem Kaltleiter KL, geschaltet. Während der Elektrodenvorheizphase überbrückt der Kaltleiter KL den Kondensator C8 und verhindert eine vorzeitige Lampenzündung. Das Anschwingen des Halbbrückenwechselrichters erfolgt mittels der aus dem ohmschen Widerstand R2, der Diode D4, dem Kondensator C4 und dem Diac DI bestehenden Startschaltung. Der Kondensator C4 wird über den Widerstand R2 auf die Durchbruchspannung des Diacs DI aufgeladen, der dann Triggerimpulse an der Basis des Transistors Q2 erzeugt. Als Startwiderstand für den Halbbrückenwechselrichter WR dient der ohmsche Widerstand R9.

Die Gleichspannungsversorgung des Halbbrückenwechselrichters Q1, Q2 übernimmt ein Brückengleichrichter GL, dessen Eingang über ein Oberwellenfilter F an eine 120 V Wechselspannungsquelle angeschlossen ist. Parallel zum Gleichspannungsausgang des Brückengleichrichters GL ist ein Kondensator C10 geschaltet. Die Weltigkeit der von, Brückengleichrichter GL generierten pulsierenden Gleichspannung wird durch eine parallel zum Gleichspannungseingang des Wechselrichters Q1, Q2 geschalteten Glättungseinheit, die aus zwei Elektrolytkondensatoren C1, C2, drei Gleichrichterdioden D1, D2, D3, einem ohmschen Widerstand R1 und einem Kondensator C3 besteht, reduziert. Der Pluspol des Elektrolytkondensators C1 und die Kathode der Gleichrichterdiode D3 sind mit den, positiven Ausgang des Gleichrichters GL und mit dem Kollektoranschluß des Schalttransistors Q1 verbunden. Der Minuspol des Elektrolytkondensators C1 ist über einen ersten Verzweigungspunkt V1 an die Kathode der Gleichrichterdiode D1 angeschlossen. Der Minuspol des Elektrolytkondensators C2 und die Anode der Gleichrichterdiode D1 sind mit dem negativen Ausgang des Brückengleichrichters GL und mit dem Emitteranschluß des Schalttransistors Q2 verbunden, während der Pluspol des Elektrolytkondensators C2 über einen zweiten Verzweigungspunkt V2 an die Anode der Gleichrichterdiode D3 angeschlossen ist. Die Gleichrichterdiode D2 ist in Durchlaßrichtung zwischen dem ersten V1 und dem zweiten V2 Verzweigungspunkt integriert. Der ohmsche Widerstand R1 ist mit dem Verzweigungspunkt V2 und mit der Kathode der Gleichrichterdiode D2 verbunden. Der Kondensator C3 ist parallel zum ohmschen Widerstand R1 geschaltet. Die Funktionsweise dieser Glättungseinheit wurde bereits weiter oben im Text erläutert. Die Schaltungsanordnung gemäß des obigen Ausführungsbeispiels weist einen Klirrfaktor von ca. 25 % und einen Netzleistungsfaktor von ca. 0,96 auf.

**Tabelle 1**

| Dimensionierung der elektrischen Bauteile für eine Schaltungsanordnung zum Betrieb einer 20 W Leuchtstofflampe an 120 V Netzspannung gemäß des Ausführungsbeispiels | |
|---|---|
| R1, R7 | 150 Ω, 5% |
| R2, R9 | 220 KΩ |
| R3, R4 | 0,56 Ω |
| R5, R6 | 12 Ω |
| C1, C2 | 47 µF, 100 V_ |
| C3 | 47 nF, 250 V_ |
| C4 | 100 nF, 50V_ |
| C5 | 4,7 nF, 1000 V_ |
| C6 | 33 nF, 400 V_ |
| C7 | 2,2 nF, 630 V_ |
| C8 | 3,3 nF, 630 V_ |
| C9, C10 | 10nF, 400 V_ |
| LR | 0,9 mH |
| GL | B250C800 |
| D1, D2, D3, D4 | 1N4004 |

## Patentansprüche

1. Schaltungsanordnung zum Betrieb von Niederdruckentladungslampen mit
- einem Wechselrichter (WR), an den ein LC-Ausgangskreis zur Spannungsversorgung wenigstens einer Niederdruckentladungslampe (L) angeschlossen ist,
- einer Gleichspannungsquelle (GL) zur Spannungsversorgung des Wechselrichters (WR),
- einer Glättungseinheit (G), die parallel zum Eingang des Wechselrichters (WR) geschaltet ist und aus zwei Elektrolytkondensatoren (C1, C2) und drei Gleichrichterdioden (D1, D2, D3) besteht, wobei die Elektrolytkondensatoren (C1, C2) während des Ladevorganges über die Diode (D2) in Serie geschaltet sind, und während des Entladevorganges, der über die Dioden (D1, D3) erfolgt, parallel zueinander angeordnet sind,
dadurch gekennzeichnet, daß die Glättungseinheit (G) einen ohmschen Widerstand (R1) enthält, der während des Ladevorganges in Serie zu den beiden Elektrolytkondensatoren (C1, C2) und zur Gleichrichterdiode (D2) geschaltet ist, und einen Kondensator (C3) besitzt, der parallel zum ohmschen Widerstand (R1) geschaltet ist und der den Widerstand (R1) für den vom Wechselrichter (WR) erzeugten und zu den Elektrolytkondensatoren (C1, C2) zurückfließenden hochfrequenten Wechselstromanteil überbrückt..

2. Schaltungsanordnung nach Anspruch 1, dadurch gekennzeichnet, daß
- der Pluspol des Elektrolytkondensators (C1) und die Kathode der Gleichrichterdiode (D3) mit dem Pluspol der Gleichspannungsquelle (GL) und mit dem positiven Eingang des Wechselrichters (WR) verbunden sind,
- der Minuspol des Elektrolytkondensators (C1) über einen ersten Verzweigungspunkt (V1) mit der Kathode der Gleichrichterdiode (D1) verbunden ist,
- der Minuspol des Elektrolytkondensators (C2) und die Anode der Gleichrichterdiode (D1) mit dem Minuspol der Gleichspannungsquelle (GL) und mit dem negativen Eingang des Wechselrichters (WR) verbunden sind,
- der Pluspol des Elektrolytkondensators (C2) über einen zweiten Verzweigungspunkt (V2) mit der Anode der Gleichrichterdiode (D3) verbunden ist,
- die Gleichrichterdiode (D2) zwischen dem ersten (V1) und dem zweiten (V2) Verzweigungspunkt in Durchlaßrichtung integriert ist,
- der ohmsche Widerstand (R1) zwischen den Verzweigungspunkten (V1, V2) in Serie zur Gleichrichterdiode (D2) in die Glättungseinheit (G) integriert ist.
- parallel zum ohmschen Widerstand (R1) ein Kondensator (C3) geschaltet ist, der den Widerstand (R1) für den vom Wechselrichter (WR) erzeugten und zu den Elektrolytkondensatoren (C1, C2) zurückfließenden hochfrequenten Wechselstromanteil überbrückt.
